# EUROPEAN PATENT SPECIFICATION

(11) **EP 0 724 188 B1**
(45) Date of publication and mention of the grant of the patent: **26.04.2000**
(21) Application number: 96300532.7
(22) Date of filing: 25.01.1996
(51) Int. Cl.: G03B 27/46, G03D 3/13

(54) **Photographic printing and developing apparatus**
Fotografisches Kopier- und Entwicklungsgerät
Dispositif photographique d'impression et de développement

(30) Priority: 30.01.1995 JP 1265295; 11.10.1995 JP 26324495
(43) Date of publication of application: 31.07.1996
(73) Proprietor: NORITSU KOKI CO., LTD., Wakayama-shi, Wakayama (JP)
(72) Inventor: Nishikawa, Hidetoshi, Wakayama-shi, Wakayama (JP)
(74) Representative: Hillier, Peter

(56) References cited:
- EP-A- 0 629 904
- EP-A- 0 629 915
- FR-A- 2 678 747
- US-A- 4 416 529

## Description

### BACKGROUND OF THE INVENTION

The present invention relates to a photographic printing and developing apparatus.

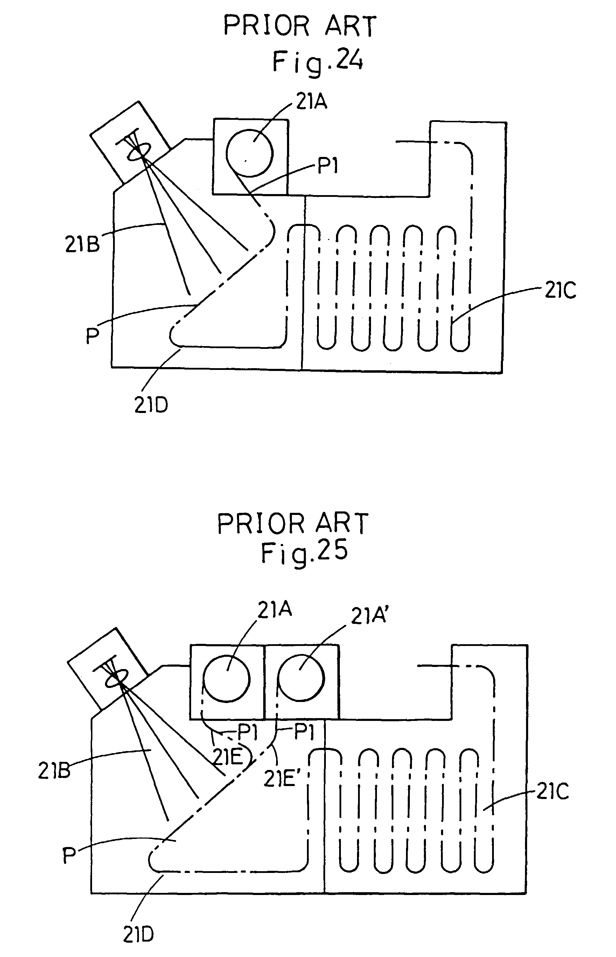

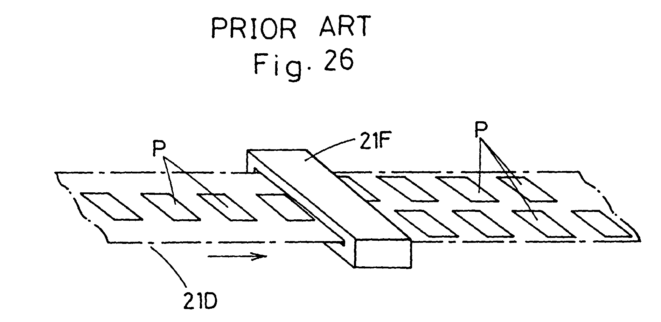

A photographic printing and developing apparatus considered by the inventor comprises a magazine 21A for accommodating a roll of photosensitive paper P1, a printing module 21B, a development module 21C, and a transfer path 21D for conveying the paper P1 from the printing module 21B to the developing module 21C, as shown in Figs. 24 and 25. In action, the paper P1 is unloaded from the magazine 21A, cut into sheets of desired size, subjected to a printing process in the printing module 21B, and conveyed along the transfer path 21D to the development module 21C for development.

The transfer path 21D of the photographic printing and developing apparatus considered by the inventor may be a single line extending from the magazine 21A (Fig. 24) or a combination of two lines from a couple of the magazines 21A and 21A' (Fig. 25). In the latter case, the two magazines 2A and 21A' feed papers P1 along their respective leading transfer paths 21E and 21E' which are later joined to each other forming the transfer path 21D.

Also, the photographic printing and developing apparatus considered by the inventor may include a paper device such as a paper pausing device for feeding sheets of paper P to the development module 21C at a constant rate regardless of the speed of action at the printing module 21B or a paper direction shifting device for shifting the direction of the sheets of paper P to increase the efficiency of feeding. The paper device is substantially disposed across the transfer path 21D.

While the paper device is capable of handling typical service sizes of the paper sheets including E, L, KG (4x6 inches) (1 inch = 25,4 mm), and panorama formats, extra sizes for enlargement may not be subjected to the action of pausing or direction shifting.

If the transfer path 21D is a single line, it has to allow any size of the paper P to be conveyed through. This requires optimum dimensions of the paper device thus increasing the overall cost of production. In addition, it takes a considerable length of time for enlarged sizes of the paper to pass through the paper device and will create a time loss in the transfer action.

A modification of the photographic printing and developing apparatus considered by the inventor may be contemplated in which as the width of the transfer path 21D is increased at the midway, a succession of the paper sheets is divided by a turnout device 21F into two (Fig. 26) or more rows for increasing the number of feedings. In this case, the transfer path 21D is still a single line and has to allow any size of the paper sheets to pass through eliminating the others of the foregoing disadvantages.

EP-A-0629904 discloses an image printer which includes a transport device for transporting standard and auxiliary photosensitive materials to a developing unit, an exposure system for exposing the photosensitive materials. The transport device includes a standard transport unit and an auxiliary transport unit. The standard transport means transports to the developing unit the standard photosensitive material having sensitivity to a wavelength range of the three primary colour components of light. The auxiliary transport unit transports to the developing unit the auxiliary photosensitive material having sensitivity to a light wavelength range different from that of the standard photosensitive material. The exposure system includes a standard exposure unit and an auxiliary exposure unit. The standard exposure unit exposes the standard photosensitive material at an exposing position of the standard transport unit, while the auxiliary exposure unit exposes the auxiliary photosensitive material at an exposing position of the auxiliary transport unit.

EP-A-0629915 discloses an apparatus for arraying sheets of photosensitive material provided in a film printing-developing apparatus. Along the path to a lower outlet are mounted one-way rollers and high-speed rollers, so that the sheets of photosensitive material in a two-line zigzag arrangement will be fed at high speed. The sheets of photosensitive material thus fed out of the lower outlet are overlapped one upon another on the pan by means of a conveyor in the order of the frames in one roll of film.

Optionally a sorting guide is provided for selectively feeding the sheets of photosensitive material according to their size. The sorted sheets are fed further either in a one-line arrangement or in a two-line zigzag arrangement to an upper outlet or to the lower outlet by guides.

It is an object of the present invention, in view of the above problems of the photographic and printing apparatus considered by the inventor, to provide an improved photographic printing and developing apparatus capable of conveying sheets of printed paper of a given service size along its specific transfer path while conveying directly to a development station the sheets of an enlarged size which need not to be passed through paper devices.

### SUMMARY OF THE INVENTION

According to the present invention, there is provided a photographic printing and development apparatus as defined in claim 1.

Preferably, paper devices including a paper pausing device and a paper direction shifting device are provided across the branch transfer path.

Preferably, the turnout device comprises paper guides and a roller assembly having movable rollers for switching the direction of transfer to the branch transfer path.

Alternatively, the turnout device comprises a flexible paper guide capable of being turned to the branch transfer path.

In another alternative, the turnout device comprises a movable paper guide capable of being located at the separating point so that the direction of transfer is switched to the branch transfer path.

In a further alternative, the turnout device comprises a branch conveyor belt assembly for transferring the sheets of printed paper of a narrower size selectively to the branch transfer path while nipping them between two belts, and one or more main conveyor belt assemblies provided in parallel to the branch conveyor belt assembly for transferring the sheets of printed paper of a wider size selectively to the main transfer path while nipping them between two belts.

Desirably, a support guide is provided for assisting the sheets of the narrower size to travel through the branch conveyor belt assembly and the sheets of the wider size to travel across the main conveyor belt assemblies, and its movement is controlled by a controller means.

Preferably the movement of the turnout device is controlled by a controller means which comprises a detector for detecting the size of each sheet of printed paper, and a determinator responsive to a detection signal from the detector for producing a control signal to control the movement of the turnout device.

In the action of each photographic printing and developing apparatus of the present invention, the sheet of printed paper of the given service size are selectively transferred from the transfer path to the branch transfer path at the separating point by the turnout device. The sheets of printed paper of the given size are then subjected to a temporal pausing action and a direction shifting action of their respective paper devices mounted across the branch transfer path and then looped back to the main transfer path before further conveyed to the development station.

Meanwhile, the sheets of printed paper of the enlarged size are directly conveyed through the main transfer path to the development station without traveling along the branch transfer path.

### BRIEF DESCRIPTION OF THE DRAWINGS

Fig.1 is a schematic view of a photographic printing and developing apparatus according to Embodiment 1 of the present invention;
Figs.2 to 4 are perspective enlarged views of the same;
Figs.5 and 6 are side views showing a turnout device of the same;
Fig.7 is a side view showing a joining device of the same;
Fig.8 is a side view showing a direction shifting device of the same;
Fig.9 is a side view showing a pausing device of the same;
Fig.10 is a block diagram of a controller means for controlling the action of the turnout device of the same;
Fig.11 is a side view showing a turnout device of Embodiment 2 of the present invention;
Fig.12 is a side view of the turnout device of the same;
Fig.13 is a side view showing a turnout device of Embodiment 3 of the present invention;
Fig.14 is a perspective view of a paper guide in the turnout device of the same;
Fig.15 is a side view of the turnout device of the same;
Fig.16 is a perspective view showing a turnout device of Embodiment 4 of the present invention;
Fig.17 is a side view of the turnout device of the same;
Fig.18 is a perspective view showing a turnout device of Embodiment 5 of the present invention;
Fig.19 is a side view of the turnout device of the same;
Fig.20 is a perspective view showing a turnout device of Embodiment 6 of the present invention;
Fig.21 is a side view of the turnout device of the same;
Fig.22 is a perspective view showing a turnout device of Embodiment 7 of the present invention;
Fig.23 is a side view of the turnout device of the same; and
Figs.24 to 26 are schematic views showing prior art photographic printing and developing apparatuses.

### DETAILED DESCRIPTION OF THE PREFERRED EMBODIMENTS

### Embodiment 1

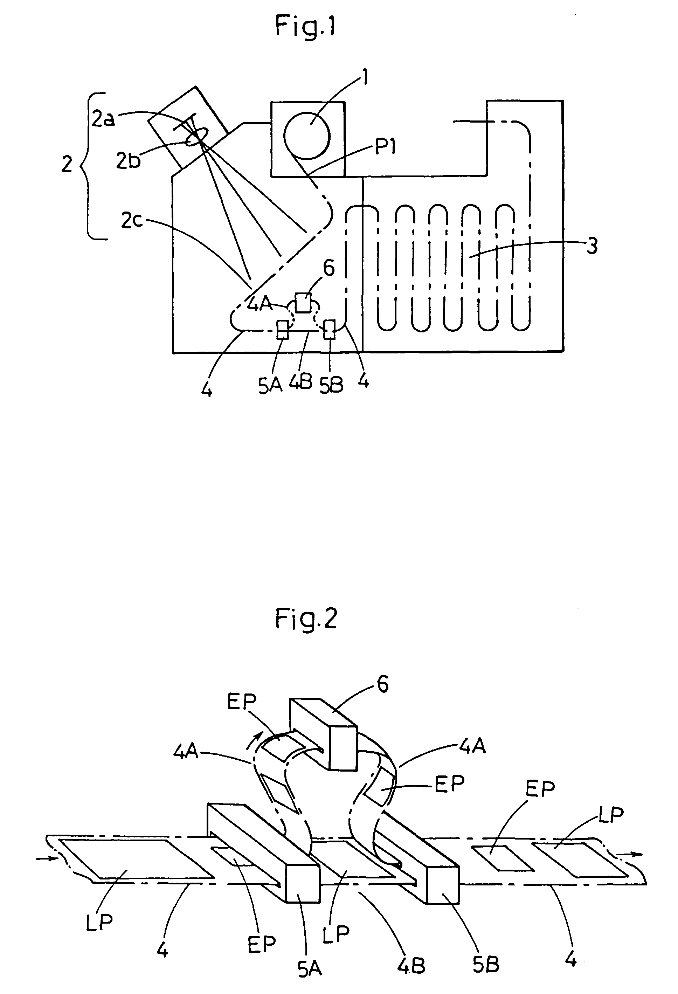

Fig.1 is a schematic view of a photographic printing and developing apparatus according to the present invention which comprises a magazine 1 for accommodating a roll of (photosensitive printing) paper P1, a printing module 2, a development module 3, and a transfer path 4 for conveying sheets of the paper P1 from the printing module 2 to the development module 3.

The printing module 2 is provided for printing images of a negative film on applicable format sheets EP and LP of the paper P1, a light source unit (not shown), a negative mask 2a, a lens unit 2b, and an exposure station 2c.

The development module 3 subjects the printed paper to a development process and comprises a development tub, a bleaching tub, a stabilizer tub, and a dryer.

The transfer path 4 is separated at the midway into a branch transfer path 4A and a main transfer path 4B. The two paths 4A and 4B are joined again in the downstream of the separating point.

A turnout device 5A is disposed at the separating point while a joining device 5B is provided at the joining point.

The branch transfer path 4A extends above the main transfer path 4B which runs at a minimum distance from the separating point to the joining point.

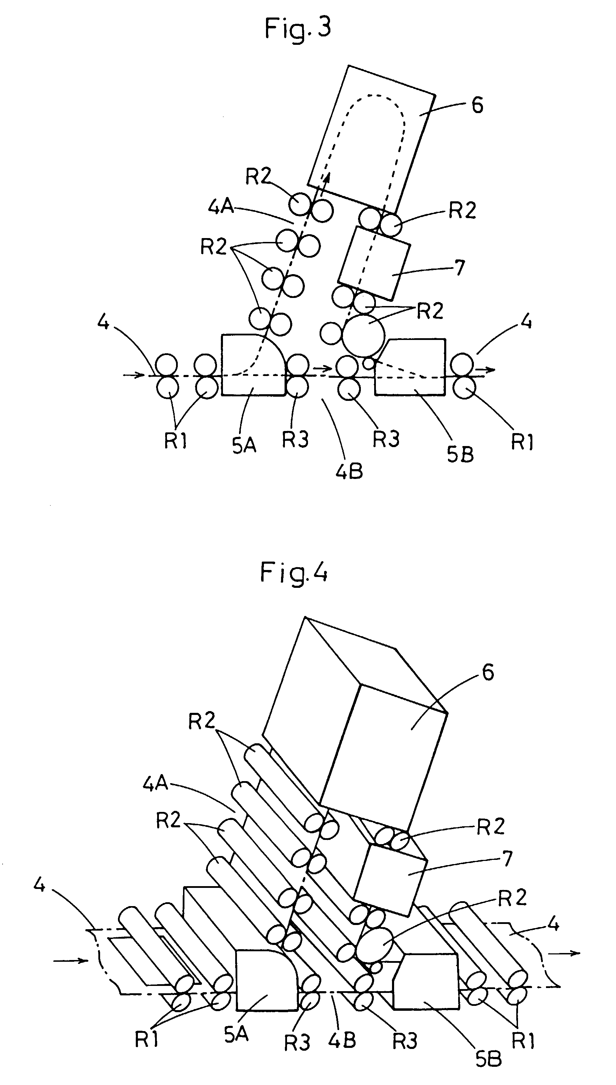

A paper device or pausing device 6 (described later in more details) and a direction shifting device 7 (described later) are disposed across the branch transfer path 4A as best shown in Figs.3 and 4.

There are transfer rollers R1, R2, and R3 mounted along the transfer path 4, branch transfer path 4A, and main transfer path 4B.

Denoted by 8 is a switch in the turnout device 5A.

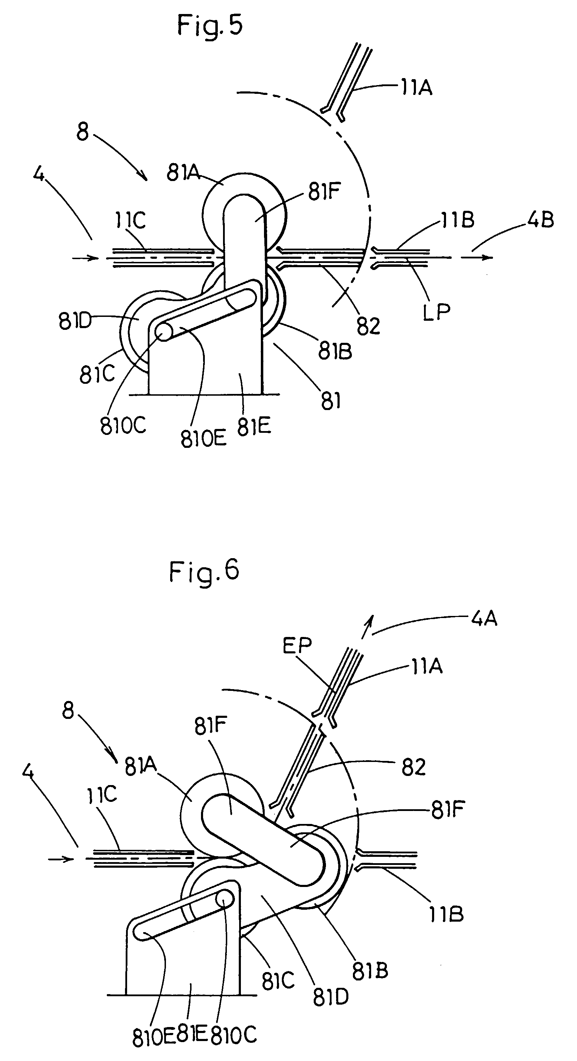

The switch 8 is provided for feeding the sheets EP of a given service size from the transfer path 4 to the branch transfer path 4A and comprises a switch roller assembly 81 and a paper guide 82 as shown in Figs. 5 and 6.

The switch roller assembly 81 consists mainly of a drive roller 81A and a pair of front and rear press rollers 81B, 81C. The press rollers 81B and 81C are linked to each other by an arm 81D which also acts as a paper guide. The axes of the press rollers 81B and 81C are rotatably mounted to the arm 81D.

The drive roller 81A is linked by an arm 81F to the press roller 81B. Similarly, the axes of the drive roller 81A and the press roller 81B are rotatably mounted to the arm 81F.

The axis 810C of the press roller 81C is arranged movable in and along a guide slot 810E provided in a roller guide 81E.

The paper guide 82 is arranged movable together with the arm 81F for directing the sheets EP from the transfer path 4 to the branch transfer path 4A.

The arm 81F is turned by a driving means (not shown).

When the arm 81F remains upright, the paper guide 82 is aligned with a receiver paper guide 11B situated at the start end of the main transfer path 48 and allows the sheets LP of an enlarged size to pass between the drive roller 81A and the press roller 81B and move directly to the main transfer path 4B.

When the arm 81F is tilted (counter-clockwisely in the figures), the paper guide 82 is communicated with a receiver paper guide 11A situated at the start end of the branch transfer path 4A and allows the sheets EP to pass between the drive roller 81A and the other press roller 81C and enter the branch transfer path 4A as is guided by the arm 81D.

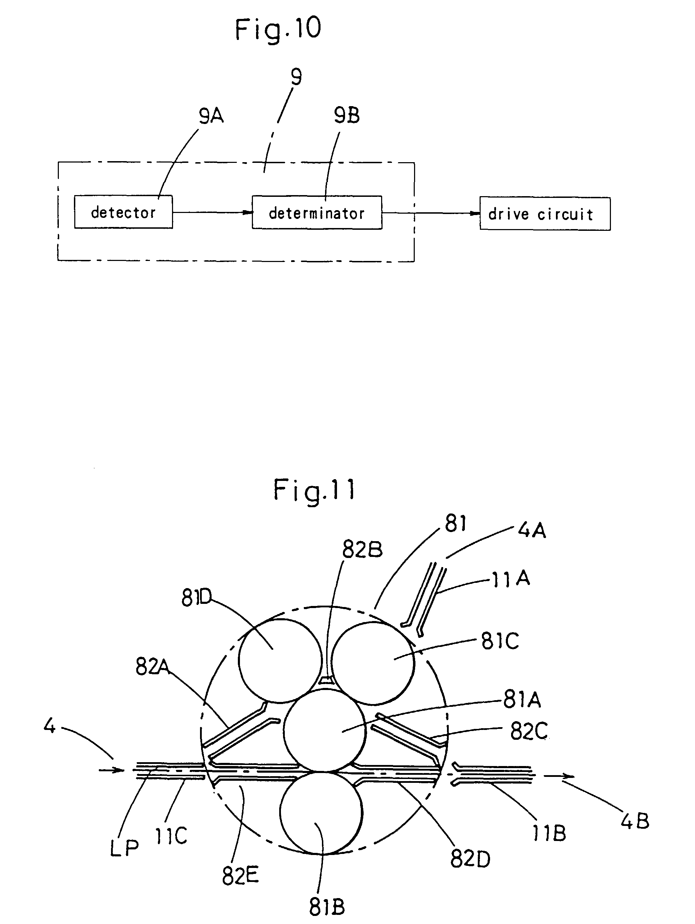

Denoted by 11C is a feeder paper guide disposed across the transfer path 4. For controlling the action of the switch 8, a controller means 9 is provided comprising a detector 9A for detecting the width and/or length of incoming sheets and a determinator 9B responsive to a detection signal from the detector 9A for producing a control signal to actuate the drive circuit of the switch 8, as shown in Fig.10.

Upon detection of the size of a sheet EP, the switch 8 is actuated to feed the sheet EP to the branch transfer path 4A. If the size of a sheet LP is detected, the switch 8 is controlled to pass the sheet LP through a short cut of the main transfer path 4B to the development module 3.

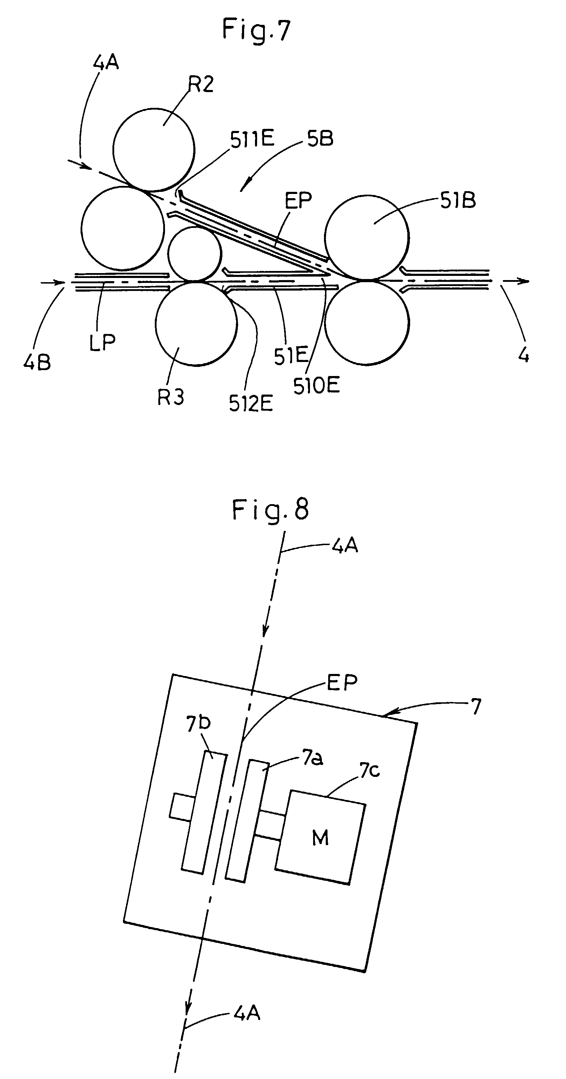

As shown in Fig.7, the joiner device 5B comprises a V-shaped joint paper guide 51E mounted between a pair of joining rollers 51B situated at the joining point and two pairs of rollers R2 and R3 situated at the terminal ends of the branch transfer path 4A and the main transfer path 4B respectively.

The V-shaped joint paper guide 51E has one outlet 510E thereof communicated to between the joining rollers 51B and two inlets 511E and 512E thereof communicated to between the rollers R2 and between the rollers R3 respectively.

In action, the sheets of the paper P conveyed along the branch transfer path 4A and the main transfer path 48 are guided by the paper guide 51E and fed to between the joining rollers 51B before further transferred along the transfer path 4 to the development module 3.

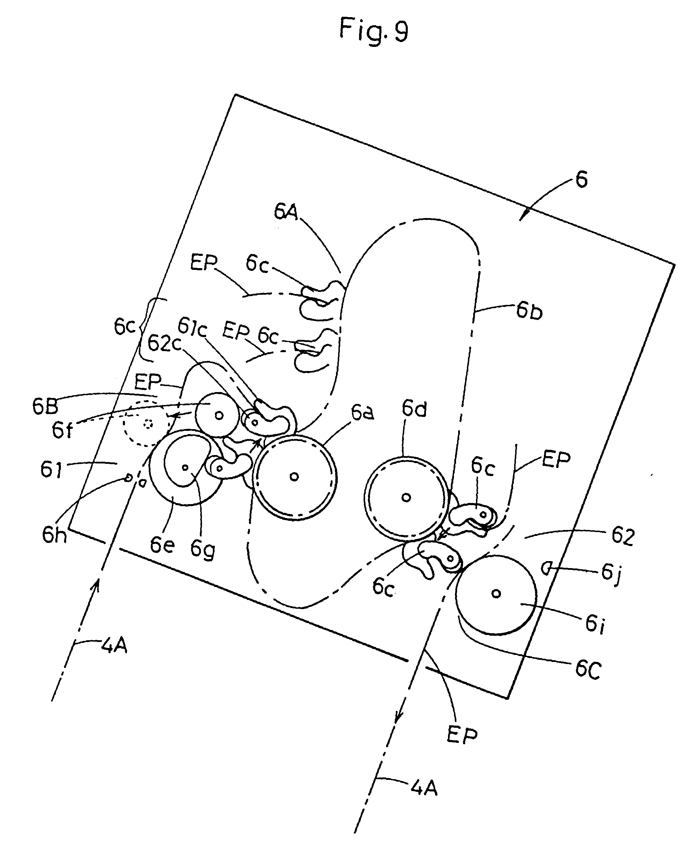

The pausing device 6 will now be explained referring to Fig.9.

The pausing device 6 temporarily holds a desired number of the printed sheets EP so that it can deliver them to the development module 3 at an optimum rate corresponding to the processing capability of the development module 3.

The pausing device 6 comprises a pausing means 6A for holding a series of the sheets EP temporarily, a feeding means 68 for feeding the sheets EP into the pausing means 6A, and a delivering means 6C for releasing the sheets EP from the pausing means 6A.

The pausing means 6A has a plurality of grip members 6c mounted at equal intervals to a chain 6b which runs between two sprockets 6a and 6d. While the sheets EP being gripped with their respective grip members 6c, they are conveyed from a feeding point 61 to a releasing point 62.

The grip member 6c comprises a main body 61c and a gripper arm 62c mounted openably to the main body 61c.

The feeding means 68 is located at the feeding point 61 of the pausing means 6A and comprises a drive roller 6e, a press roller 6f, a cam 6g, and a sheet sensor 6h.

The press roller 6f is controlled in synchronization with the rotation of the sprockets 6a and 6d to travel on the circumference of the drive roller 6e.

The sensor 6h upon detecting the leading end of a printed sheet EP fed from the printing module 2 produces a detection signal which allows the sheet EP to be nipped between the drive roller 6e and the press roller 6f and conveyed to the grip member 6c.

The delivering means 6C comprises a drive roller 6i and a sensor 6j and is located at the releasing point of the pausing means 6A.

The actions of the pausing device 6 will be explained in a sequence.
(1)When the grip member 6c has been moved to the feeding point, its gripper arm 62c is opened by the action of the cam 6g. Also, the press roller 6f is returned close to the sensor 6h in response to the detection signal of the sensor 6h and holds the leading end of an infed sheet EP with the drive roller 6e.
(2)As the drive roller 6e rotates, the press roller 6f carries the sheet EP to allow the grip member 6c to accept the leading end of the sheet EP.
(3)Upon the leading end of the sheet EP reaching the grip member 6c as calculated after the detection of the sensor 6h, the sprocket 6a is turned through a given angle to release the gripper arm 62c from the cam 6g and allow the grip member 6c to grip the leading end of the sheet EP between its arm 62c and main body 61c.

Simultaneously, the press roller 6f is returned back to (its standby location) near the sensor 6h.
(4)The drive roller 6e is further rotated to carry the trailing end of the sheet EP towards the pausing means 6A.
(5)By repeating the above actions of feeding the sheets EP to the grip members 6c, a desired number of the sheets EP are held in the pausing means 6A.
(6)At the releasing point of the pausing means 6A, the gripper arm 62c of the grip member 6c is opened by the action of the drive roller 6i thus releasing the sheet EP.

Simultaneously, the sensor 6j detects the arrival of the sheet EP and produces a detection signal which then stops the rotation of the sprocket 6d. By now, the sheet EP remains held between the gripper arm 61c of the grip member 6c and the drive roller 6i.

When the drive roller 6i is rotated, the sheet EP advances up to the branch transfer path 4A. Upon the sensor 6j detecting the trailing end of the sheet EP, its detection signal triggers a rotation of the sprocket 6d. As the grip member 6c has reached the releasing point of the pausing means 6A, the sheet EP is released and transferred to the branch transfer path 4A.
(7)By repeating the above actions, the sheets EP is temporarily held before conveyed along the branch transfer path 4A to the development module 3.

Accordingly, the feeding rate of the sheets EP to the development module 3 can be maintained constant regardless of an abrupt change in the printing speed of the printing module 2 thus contributing to the higher efficiency of the paper sheets conveying action.

It is understood that the pausing device 6 is not limited to the prescribed arrangement.

The branch transfer path 4A may be increased in the width so that multiple rows of the sheets EP are conveyed as having been allocated by a shifting device (not shown). This will increase the number of the sheets EP to be conveyed at once along the branch transfer path 4A which thus serves as a pausing device.

The direction shifting device 7 comprises a pair of rotary disks 7a and 7b for holding and turning a sheet EP of a given service size, and a rotating means 7c for driving the rotary disks 7a and 7b to change the direction of the sheet EP.

When the sheet EP is oriented with its short side extending in the direction of transfer, the number of the sheets EP per distance on the transfer path increases. As the result, the transfer of sheets EP to the development module 3 will be enhanced in efficiency.

It is also understood that the direction shifting device 7 is not limited to the prescribed arrangement.

According to Embodiment 1, the pausing device 6 and the direction shifting device 7 are provided at intermediate locations of the branch transfer path 4A thus increasing the number of sheets of printed paper to be conveyed and enhancing the printing action of the printing module 2. This will allow the processing capability of the photographic printing and developing apparatus to increase about 40 percents.

### Embodiment 2

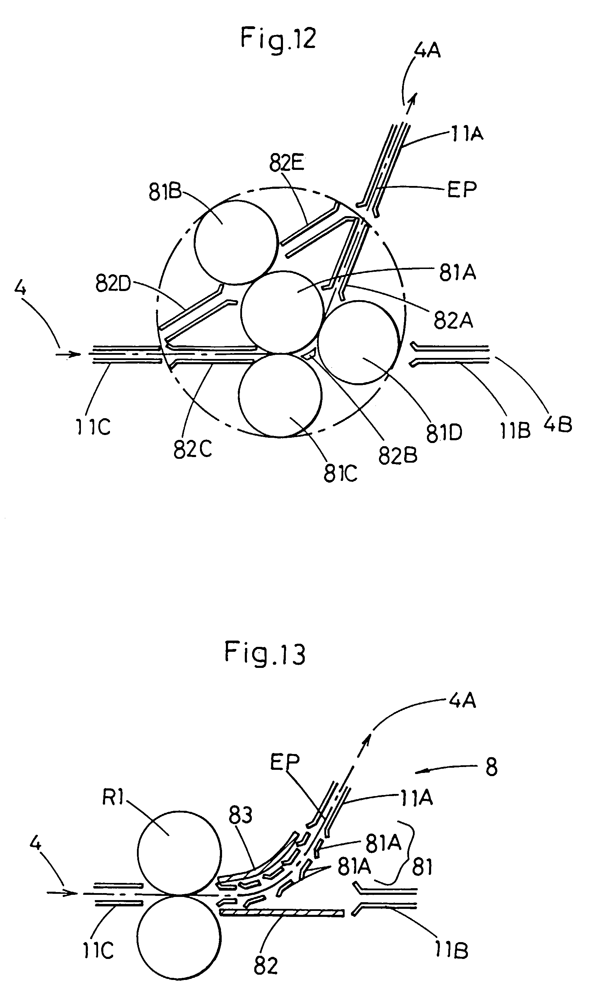

Figs.11 and 12 illustrate another form of the turnout device 8.

The turnout device 8 of this embodiment comprises a switch roller assembly 81 and multiple paper guides 82A, 82B, 82C, 82D, and 82E.

The switch roller assembly 81 consists mainly of a center drive roller 81A and three press rollers 81B, 81C, and 81D.

The paper guides 82A, 82B, and 82C are provided for conveying the sheets EP of a given service size to the branch transfer path 4A while the other paper guides 82D and 82E are used for carrying the sheets LP of an enlarged size straight to the main transfer path 4B of the transfer path 4.

The press rollers 81B to 81D and the paper guides 82A to 82E are moved about the center drive roller 81A by a driving means (not shown) as they remain in their relative positional relationship. Their movement is controlled to distribute the sheets EP to the branch transfer path 4A and the sheets LP to the main transfer path 4B.

Fig.11 shows conveying of the sheets LP to the main transfer path 4B from the paper guide 82E aligned with the outlet of a paper guide 11C of the transfer path 4 to the paper guide 82D aligned with the inlet of a paper guide 11B of the main transfer path 4B. Accordingly, the sheets LP are conveyed from the paper guide 82E between the center drive roller 81A and the press roller 81B through the paper guides 82D to the main transfer path 4B.

Fig.12 shows conveying of the sheets EP to the branch transfer path 4A from the paper guide 82C aligned with the outlet of the paper guide 11C of the transfer path 4 to the paper guide 82A aligned with the inlet of a paper guide 11A of the branch transfer path 4A.

Hence, the sheets EP are transferred from the paper guide 82C between the center drive roller 81A and the two press rollers 81C and 81D through the paper guides 82A to the branch transfer path 4A.

The action of the turnout device 8 is controlled by a controller means which is similar to that described in Embodiment 1 and will be explained in no more details.

### Embodiment 3

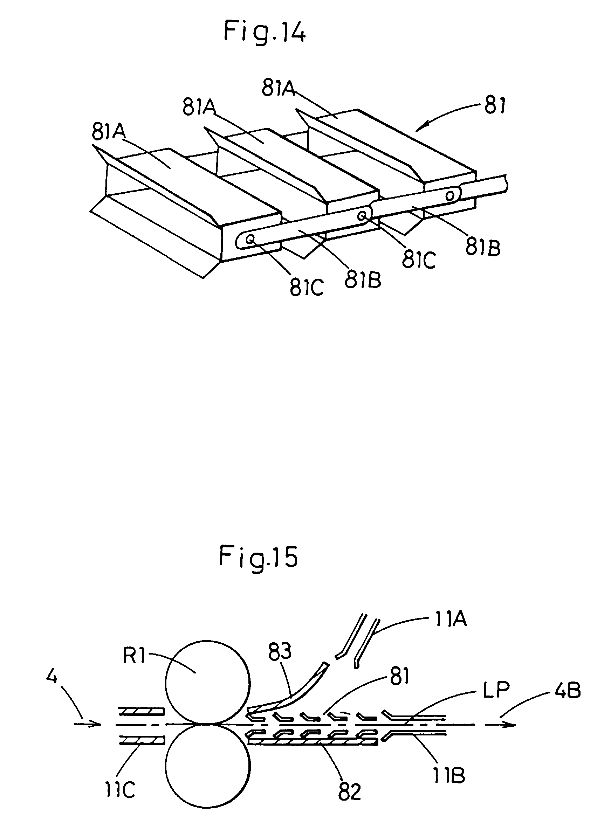

Figs.13 to 15 illustrate a further form of the turnout device 8.

The turnout device 8 of Embodiment 3 includes a flexible paper guide 81 capable of being bent towards the inlet of the branch transfer path 4A.

The flexible paper guide 81 comprises a plurality of short guide segments 81A joined to one another by arm joiners 81B. More specifically, two adjacent guide segments 81A are joined to each other by the arm joiner 81B which is pivotably mounted by pins 81C to sides of the guide segments 81A.

The paper guide 81 is disposed between two, upper and lower, guide members 83, 82.

When the paper guide 81 is lifted down, it comes in parallel to the lower guide member 82 and aligned with the inlet of a paper guide 11B of the main transfer path 4B.

The paper guide 81 is actuated by a driving means (not shown) which is controlled by a controller means identical to that of Embodiment 1.

Denoted by R1 are a pair of rollers between a paper guide 11C of the transfer path 4 and the paper guide 81.

The other components are similar to those of Embodiment 1 and will be no more explained.

### Embodiment 4

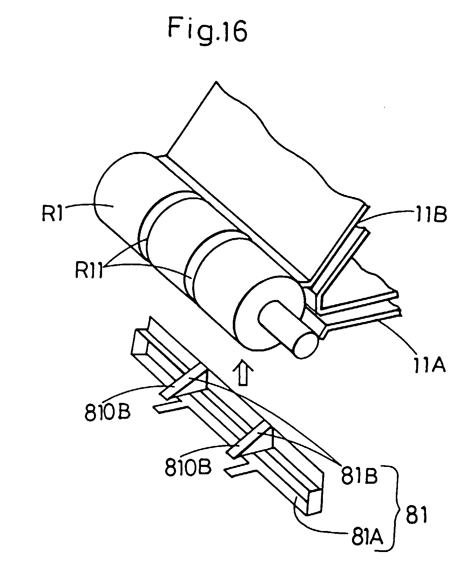

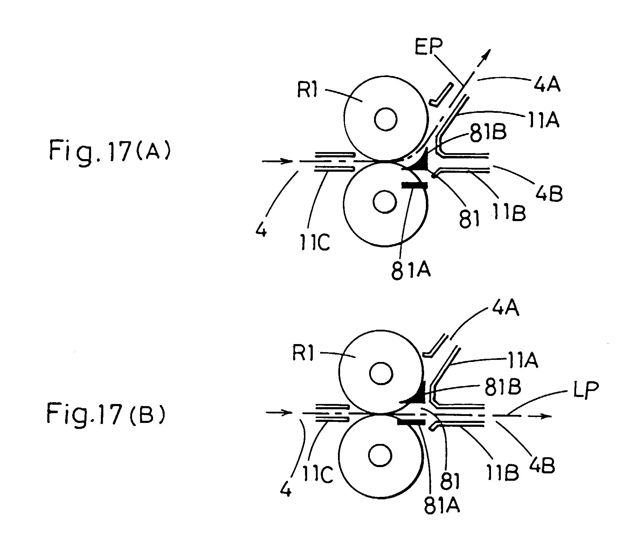

Figs.16 and 17 show a still further form of the turnout device 8.

The turnout device 8 of this embodiment includes a paper guide which is movable upward and downward.

The paper guide 81 comprises a guide frame 81A and guide blocks 81B having taper surfaces 810B respectively and mounted to a top of the guide frame 81A.

Denoted by R1 are a pair of rollers between a paper guide 11C of the transfer path 4 and the paper guide 81. Each the roller R1 has slots R11 provided therein for clearing the guide blocks 81B of the paper guide 81.

When the paper guide 81 is lifted down with its guide blocks 81B projecting across the turnout point, the sheets EP of a given service size travel along the taper surfaces 810B of the guide blocks 81B and enter the branch transfer path 4A (Fig.17(A)).

When the paper guide 81 is lifted up with its guide frame 81A extending across the path, the sheets LP of an enlarged size run through the guide frame 81A and enter the main transfer path 4B (Fig.17(B)).

There are also provided a paper guide 11A extending to the branch transfer path 4A and a paper guide 11B extending to the main transfer path 4B.

The paper guide 81 is actuated by a driving means (not shown) which is controlled with a controller means similar to that of Embodiment 1 and will be no more explained.

The other components are identical to those of Embodiment 1 and will be described in no more details.

### Embodiment 5

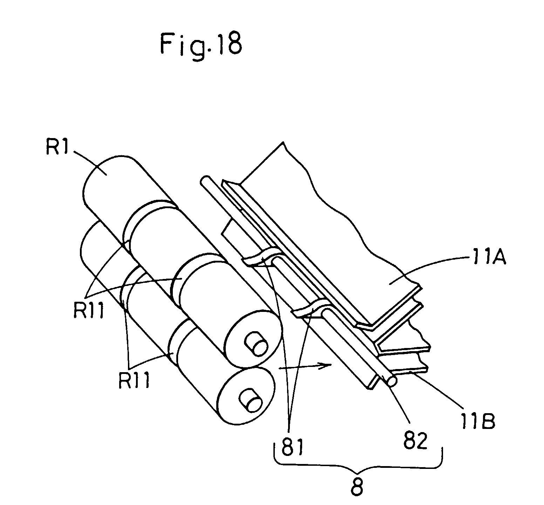

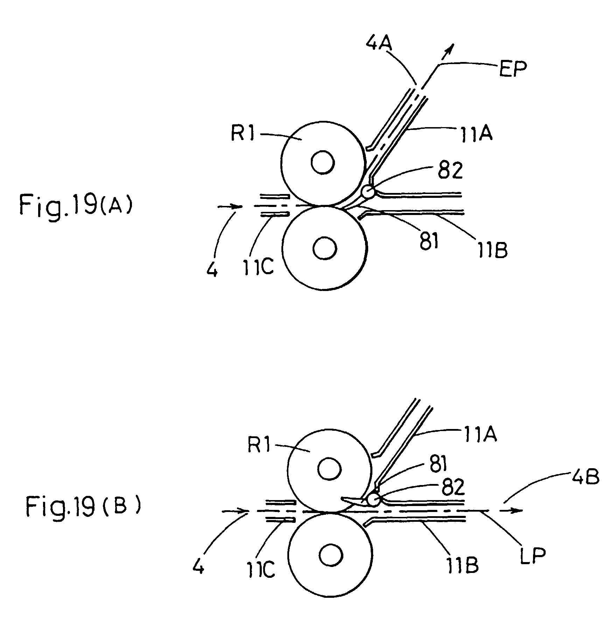

Figs.18 and 19 show a further form of the turnout device 8.

The turnout device 8 of Embodiment 5 includes claw-shaped paper guides 81 mounted to a shaft 82 for swing movements about the turnout point.

Denoted by R1 are a pair of rollers between a paper guide 11C of the transfer path 4 and the paper guides 81. Each the roller R1 has slots R11 provided therein for clearing the paper guides 81.

When the paper guides 81 are lifted down to the turnout point by rotating the shaft 82, the sheets EP of a given service size travel to the branch transfer path 4A as are guided by the paper guides 81 (Fig.19(A)).

When the paper guides 81 are lifted up away from the turnout point, the sheets LP of an enlarged size run straight to the main transfer path 4B (Fig.19(B)).

There are also provided a paper guide 11A extending to the branch transfer path 4A and a paper guide 11B extending to the main transfer path 4B.

The shaft 82 of the paper guides 81 is actuated by a driving means (not shown) which is controlled with a controller means similar to that of Embodiment 1 and will be no more explained.

The other components are identical to those of Embodiment 1 and will be described in no more details.

### Embodiment 6

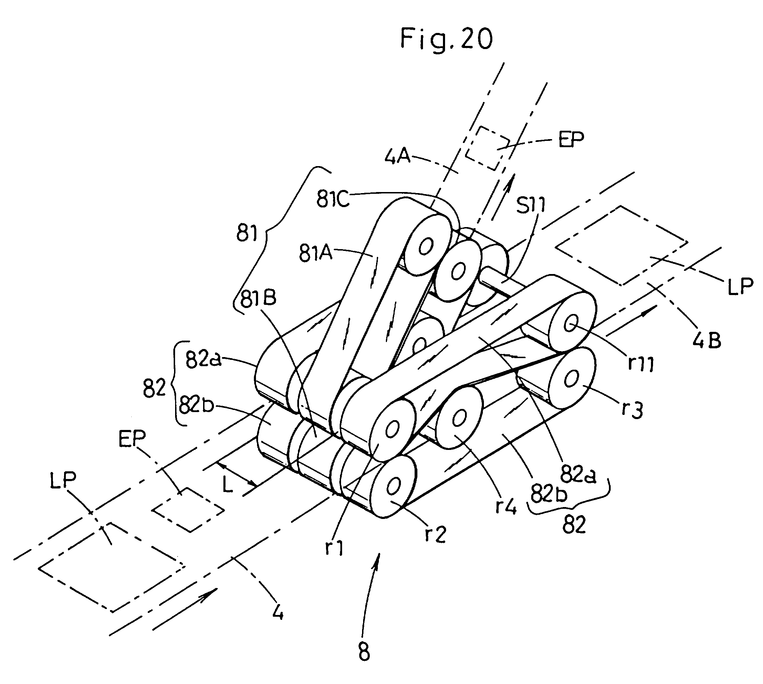

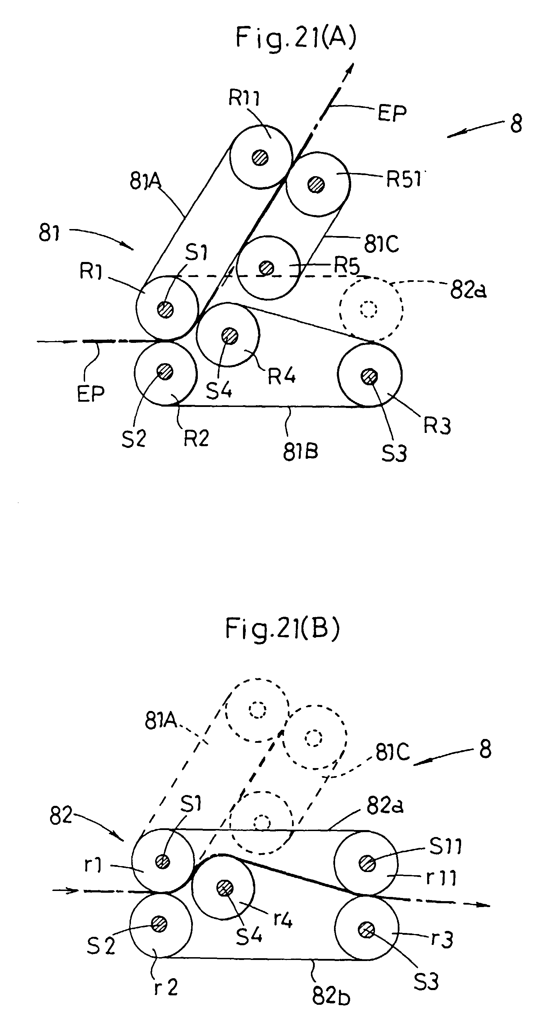

Fig.20 is a perspective view of a further form of the turnout device 8 and Fig.21 shows an action of the turnout device 8 of this embodiment.

The turnout device 8 comprises a branch conveyor belt assembly 81 for conveying the sheets EP of a given service size (with a smaller width) to the branch transfer path 4A, and a couple of main conveyor belt assemblies 82, 82 for conveying the sheets LP of an enlarged size (with a greater width) to the main transfer path 4B.

The branch conveyor belt assembly 81 is arranged with its center line coinciding with the center line of the transfer path 4. The two main conveyor belt assemblies 82, 82 are disposed on both sides of the branch conveyor belt assembly 81.

The two main conveyor belt assemblies 82, 82 are spaced from each other by a distance L which is larger than the width of the given service size sheet EP but smaller than the width of the enlarged sized sheet LP (Fig.20).

The branch conveyor belt assembly 81 includes three endless belts 81A, 81B, and 81C.

The endless belt 81A is mounted between two rollers R1 and R11, the endless belt 81B is installed on a drive roller R2, an idler roller R3, and a directional roller R4, and the endless belt 81C is mounted between two rollers R5 and R51 (Fig. 21A).

The endless belt 81B comes at its front end in direct contact with a front part of the endless belt 81A and is partially lifted up by the directional roller R4 (Fig.21A).The endless belt 81C is shorter than the endless belt 81A and extends in parallel to a rear part of the same.

The main conveyor belt assembly 82 includes two, upper and lower, endless belts 82a and 82b between which sheets of the paper are passed. The upper endless belt 82a is mounted between two rollers r1 and r11, and the lower endless belt 82b is installed on a drive roller r2, an idler roller r3, and a guide roller r4 (Fig. 21B).

As two of the rollers r1, r1 on the left and right endless belts 82a, 82a are located coaxially on both sides of the roller R1 of the endless belt 81A, the three rollers r1, r1, and R1 are mounted on a shaft S1.

Also, two of the other rollers r11, r11 on the endless belts 82a are located on left and right sides of the transfer path respectively, and mounted on a shaft S11.

As two of the rollers r2, r2 on the left and right endless belts 82b, 82b are located coaxially on both sides of the roller R2 of the endless belt 81B, the three rollers r2, r2, and R2 are mounted on a shaft S2.

Similarly, two of the second rollers r3, r3 on the left and right endless belts 82b, 82b are located coaxially on both sides of the roller R3 of the endless belt 81B, and the three rollers r3, r3, and R3 are mounted on a shaft S3.

As two of the third rollers r4, r4 on the left and right endless belts 82b, 82b are located coaxially on both sides of the roller R4 of the endless belt 81B, the three rollers r4, r4, and R4 are mounted on a shaft S4.

The action of the turnout device 8 of this embodiment will be explained.

Each of the sheets EP and LP is conveyed with its center line overlapping the center line of the transfer path 4 until it arrives at the turnout device 8 (Fig.20).

Upon the sheet EP of a given service size being nipped between the two endless belts 81A and 81B of the branch conveyor belt assembly 81, it is turned upward by the action of the directional roller R4 and conveyed between the two endless belts 81A and 81C up to the branch transfer path 4A (Fig.21(A)).

The sheet EP does not go into any of the main conveyor belt assemblies 82 as its width is narrow.

The sheet LP of an enlarged size is nipped between the two endless belts 81A and 81B of the branch conveyor belt assembly 81 and also with its side extension (each of both sides) between the two endless belts 82a and 82b of each main conveyor belt assembly 82.

While the center of the sheet LP is turned up by the action of the branch conveyor belt assembly 81, both the side extensions are lifted up by the action of the guide rollers r4, r4 of the left and right main conveyor belt assemblies 82, 82. This prevents the sheet LP from being bent only at the center and fractured.

As the sheet LP is conveyed further, each of its side extensions is turned back towards the main transfer path 4B because it is nipped between the two endless belts 82a and 82b of the main conveyor belt assembly 82. Accordingly, the center of the sheet LP follows and is turned towards the main transfer path 4B but not carried into between the belts 81A and 81C of the branch conveyor belt assembly 81.

The sheet LP is then conveyed up to the main transfer path 4B.

As set forth above, the turnout device 8 of Embodiment 8 requires none of the controller means described in Embodiment 1.

### Embodiment 7

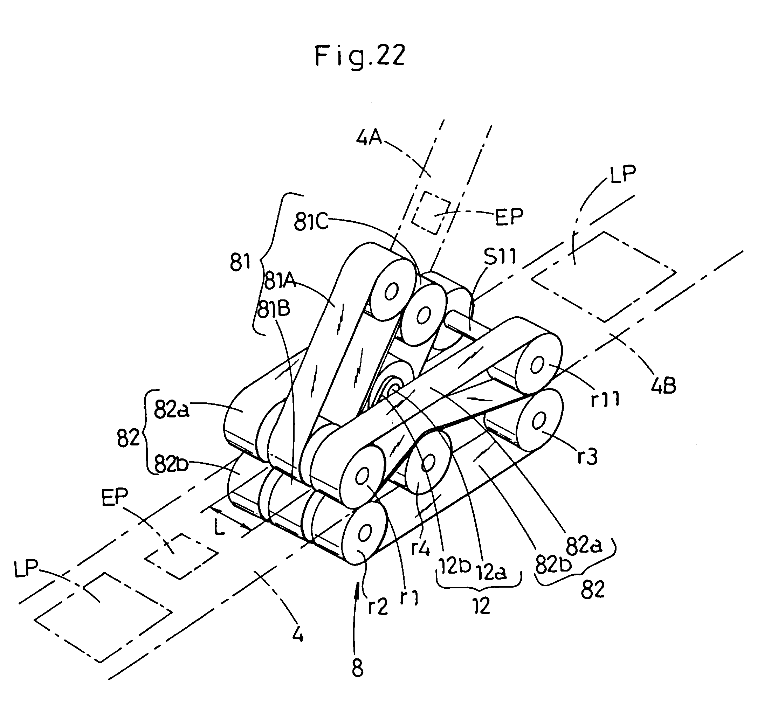

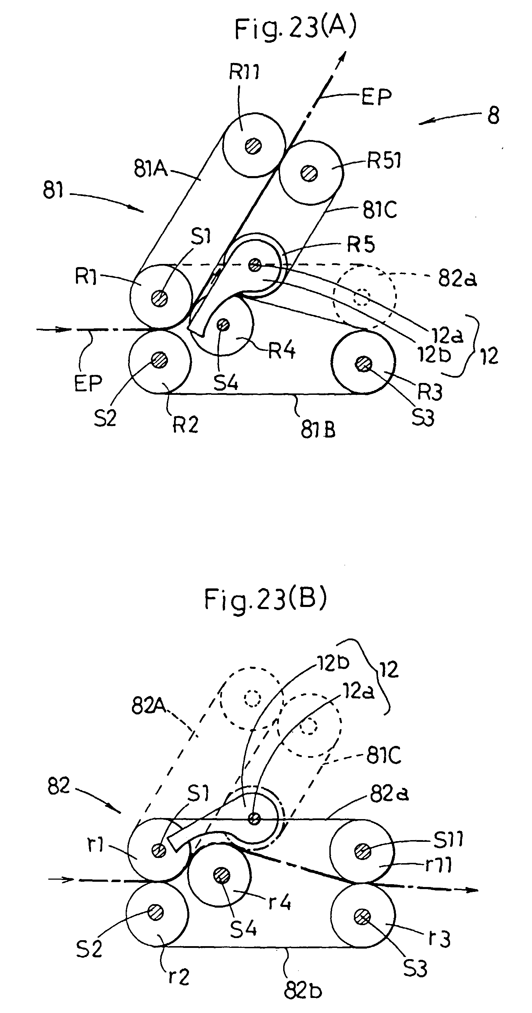

Fig.22 is a perspective view of another turnout device and Fig.23 illustrates an action of the same.

The turnout device of this embodiment is equal to that of Embodiment 6 added with a support guide 12. The other arrangement and components are identical to those of Embodiment 6 and denoted by like numerals but will be explained in no more details.

The support guide 12 comprises a shaft 12a and a support plate 12b pivotably mounted on the shaft 12a. The guide plate 12b is located between the branch conveyor belt assembly 81 and the main conveyor belt assembly 82 (Fig.22). When the guide plate 12b is turned downward, it acts as a guide for assisting the sheet EP to travel upward to between the two endless belts 81A and 81C, as shown in Fig.23(A).

When the guide plate 12b is turned upward as shown in Fig.23(B), it limits the upward movement of the sheet LP which is thus conveyed straight to the main transfer path 4B.

The support guide 12 is actuated by a driving means (not shown) which is controlled by a controller means similar to that of Embodiment 1.

## Claims

1. A photographic printing and development apparatus including a transfer path device (4) along which sheets of printed paper are conveyed from a printing station (2) to a development station (3), said transfer path device (4) comprising:
a main transfer path device (4B);
a branch transfer path device (4A) branching from said main transfer path device (4B) at a separation position and joining said main transfer path device (4B) at a joining position located downstream of said separation position; and
a turnout device (5A) located at said separation position for passing sheets (EP, LP) to said branch transfer path device (4A) and back to said main transfer path device (4B) in dependence upon sheet size.

2. A photographic printing and developing apparatus according to claim 1, wherein paper devices including a paper pausing device (6) and a paper direction shifting device (7) are provided across the branch transfer path device (4A).

3. A photographic printing and developing apparatus according to claim 1 or 2, wherein the turnout device (8) comprises paper guides (11A, 11B) and a roller assembly (81) having movable rollers (81A, 81B, 81C) for switching the direction of transfer of sheets to the branch transfer path device.

4. A photographic printing and developing apparatus according to claim 1 or 2, wherein the turnout device (8) comprises a flexible paper guide (81A, 81B) capable of being turned to the branch transfer path device.

5. A photographic printing and developing apparatus according to claim 1 or 2, wherein the turnout device (8) comprises a movable paper guide (81) capable of being located at the separating point so that the direction of transfer is switched to the branch transfer path device.

6. A photographic printing and developing apparatus according to claim 1 or 2, wherein the turnout device (8) comprises a branch conveyor belt assembly (81) for transferring the sheets (EP) of printed paper of a narrower size selectively to the branch transfer path device (4A) while nipping them between two belts, and one or more main conveyor belt assemblies (82) provided in parallel to the branch conveyor belt assembly for transferring the sheets (LP) of printed paper of a wider size selectively to the main transfer path device (4B) while nipping them between two belts.

7. A photographic printing and developing apparatus according to claim 6, wherein a support guide (12) is provided for assisting the sheets (EP) of the narrower size to travel through the branch conveyor belt assembly (81) and the sheets (LP) of the wider size to travel across the main conveyor belt assemblies, and its movement is controlled by a controller means.

8. A photographic printing and developing apparatus according to any of claims 1 to 5, and 7 wherein the movement of the turnout device (5A or 8) is controlled by a controller means (9) which comprises a detector (9A) for detecting the size of each sheet of printed paper, and a determinator (9B) responsive to a detection signal from the detector (9A) for producing a control signal to control the movement of the turnout device (5A).

## Patentansprüche

1. Fotografisches Kopier- und Entwicklungsgerät, das eine Transportbahnvorrichtung (4) einschließt, längs der Blätter von Kopierpapier von einer Kopierstation (2) zu einer Entwicklungsstation (3) weitergeleitet werden, wobei die Transportbahnvorrichtung (4) folgendes aufweist:
eine Haupttransportbahnvorrichtung (4B);
eine Nebentransportbahnvorrichtung (4A), die an einer Trennposition von der Haupttransportbahnvorrichtung (4B) abzweigt und an einer Zusammenführungsposition, die sich unterhalb der Trennposition befindet, mit der Haupttransportbahnvorrichtung (4B) zusammengeführt wird; und
eine Weichenvorrichtung (5A), die sich an der Trennposition befindet, um Blätter (EP, LP) in Abhängigkeit von der Blattgröße zu der Nebentransportbahnvorrichtung (4A) und zurück zu der Haupttransportbahnvorrichtung (4B) zu führen.

2. Fotografisches Kopier- und Entwicklungsgerät nach Anspruch 1, worin Papiereinrichtungen, die eine Papier-Zurückhalteeinrichtung (6) und eine Papier-Richtungsänderungseinrichtung (7) einschließen, quer zur Nebentransportbahnvorrichtung (4A) bereitgestellt werden.

3. Fotografisches Kopier- und Entwicklungsgerät nach Anspruch 1 oder 2, worin die Weichenvorrichtung (8) Papierführungen (11A, 11B) und eine Rollenbaugruppe (81) aufweist, die bewegliche Rollen (81A, 81B, 81C) zum Schalten der Richtung der Weiterleitung der Blätter zur Nebentransportbahnvorrichtung hat.

4. Fotografisches Kopier- und Entwicklungsgerät nach Anspruch 1 oder 2, worin die Weichenvorrichtung (8) eine flexible Papierführung (81A, 81B) aufweist, die zur Nebentransportbahnvorrichtung gedreht werden kann.

5. Fotografisches Kopier- und Entwicklungsgerät nach Anspruch 1 oder 2, worin die Weichenvorrichtung (8) eine bewegliche Papierführung (81) aufweist, die am Trennpunkt angeordnet werden kann, so daß die Richtung der Weiterleitung auf die Nebentransportbahnvorrichtung geschaltet wird.

6. Fotografisches Kopier- und Entwicklungsgerät nach Anspruch 1 oder 2, worin die Weichenvorrichtung (8) eine Nebenförderband-Baugruppe (81) zur selektiven Weiterleitung der Blätter (EP) des Kopierpapiers von geringerer Größe zur Nebentransportbahnvorrichtung (4A), wobei diese zwischen zwei Bändern gefaßt werden, und eine oder mehrere Hauptförderband-Baugruppen (82) aufweist, die parallel zur Nebenförderband-Baugruppe angeordnet sind, um Blätter (LP) des Kopierpapiers von einem größeren Format selektiv zur Haupttransportbahnvorrichtung (4B) weiterzuleiten, wobei sie zwischen zwei Bändern gefaßt werden.

7. Fotografisches Kopier- und Entwicklungsgerät nach Anspruch 6, worin eine Auflagenführung (12) zur Unterstützung der Bewegung der Blätter (EP) mit der geringeren Größe durch die Nebenförderband-Baugruppe (81) und der Blätter (LP) mit größerem Format quer zu den Hauptförderband-Baugruppen bereitgestellt und deren Bewegung durch Reglermittel gesteuert wird.

8. Fotografisches Kopier- und Entwicklungsgerät nach einem der Ansprüche 1 bis 5 und 7, worin die Bewegung der Weichenvorrichtung (5A oder 8) durch Reglermittel (9) gesteuert wird, die einen Detektor (9A) zum Erkennen der Größe jedes Blattes Kopierpapier und einen Determinator (9B) aufweisen, der auf ein Erkennungssignal vom Detektor (9A) anspricht, um ein Steuerungssignal zur Steuerung der Bewegung der Weichenvorrichtung (5A) zu erzeugen.

## Revendications

1. Dispositif d'impression et de développement photographique incluant un dispositif de trajet de transfert (4) le long duquel des feuilles de papier imprimé sont transportées d'un poste d'impression (2) vers un poste de développement (3), ledit dispositif de trajet de transfert (4) comprenant:
un dispositif de trajet de transfert principal (4B);
un dispositif de trajet de transfert de dérivation (4A) se séparant dudit dispositif de trajet de transfert principal (4B) au niveau d'une position de séparation et rejoignant ledit dispositif de trajet de transfert principal (4B) au niveau d'une position de jonction située en aval de ladite position de séparation; et
un dispositif d'évacuation (5A) situé au niveau de ladite position de séparation et adapté pour envoyer les feuilles (EP, LP) vers ledit dispositif de trajet de transfert de dérivation (4A) et les ramener vers ledit dispositif de trajet de transfert principal (4B) en fonction de la dimension des feuilles.

2. Dispositif d'impression et de développement photographique selon la revendication 1, dans lequel des dispositifs pour papier incluant un dispositif de pause du papier (6) et un dispositif de changement de direction du papier (7) sont prévus en travers du dispositif de trajet de transfert de dérivation (4A).

3. Dispositif d'impression et de développement photographique selon la revendication 1 ou 2, dans lequel le dispositif d'évacuation (8) comprend des guides pour papier (11A, 11B) et un ensemble de rouleaux (81) comprenant des rouleaux mobiles (81A, 81B, 81C) pour faire changer la direction de transfert des feuilles vers le dispositif de trajet de transfert de dérivation.

4. Dispositif d'impression et de développement photographique selon la revendication 1 ou 2, dans lequel le dispositif d'évacuation (8) comprend un guide pour papier flexible (81A, 81B) pouvant être tourné en direction du dispositif de trajet de transfert de dérivation.

5. Dispositif d'impression et de développement photographique selon la revendication 1 ou 2, dans lequel le dispositif d'évacuation (8) comprend un guide pour papier mobile (81) pouvant être placé, au niveau du point de séparation, de manière à ce que la direction de transfert soit changée vers le dispositif de trajet de transfert de dérivation.

6. Dispositif d'impression et de développement photographique selon la revendication 1 ou 2, dans lequel le dispositif d'évacuation (8) comprend un ensemble de courroies de transport de dérivation (81) servant à transférer sélectivement les feuilles (EP) de papier imprimé de petite dimension vers le dispositif de trajet de transfert de dérivation (4A) en les coinçant entre deux courroies, et un ou plusieurs ensemble(s) de courroies de transport principal(-paux) (82) prévu(s) parallèlement à l'ensemble de courroies de transport de dérivation et servant à transférer sélectivement les feuilles (LP) de papier imprimé de grande dimension vers le dispositif de trajet de transfert principal (4B) en les coinçant entre deux courroies.

7. Dispositif d'impression et de développement photographique selon la revendication 6, dans lequel un guide de support (12) est prévu pour aider les feuilles (EP) de petite dimension à passer à travers l'ensemble de courroies de transport de dérivation (81) et les feuilles (LP) de grande dimension à passer à travers les ensembles de courroies de transport principaux, et son mouvement est commandé par un moyen de commande.

8. Dispositif d'impression et de développement photographique selon l'une quelconque des revendications 1 à 5 et 7, dans lequel le mouvement du dispositif d'évacuation (5A ou 8) est commandé par un moyen de commande (9) qui comprend un détecteur (9A) servant à détecter la dimension de chaque feuille de papier imprimé, et un dispositif de détermination (9B) qui répond à un signal de détection provenant du détecteur (9A) pour produire un signal de commande qui commande le mouvement du dispositif d'évacuation (5A).
